Europäisches Patentamt

European Patent Office

Office européen des brevets

(11) Veröffentlichungsnummer: **0 108 865**
**A1**

## (12) EUROPÄISCHE PATENTANMELDUNG

(21) Anmeldenummer: **83107550.2**

(22) Anmeldetag: **30.07.83**

(51) Int. Cl.³: **A 62 B 17/00**, A 41 D 13/00

(30) Priorität: **14.10.82 DE 8228859 U**

(43) Veröffentlichungstag der Anmeldung: **23.05.84**
**Patentblatt 84/21**

(84) Benannte Vertragsstaaten: **FR GB IT SE**

(71) Anmelder: **SIGRI ELEKTROGRAPHIT GMBH, Werner von Siemens-Strasse 18, D-8901 Meitingen (DE)**

(72) Erfinder: **Bode, Reiner Dipl.-Ing., Nelkenweg 4, D-8901 Aindling (DE)**

(54) **Schutzkleidung.**

(57) Schutzkleidung, bestehend aus einem temperatur- und flammfesten Textilgewebe, besonders einem Mischgewebe aus thermisch stabilisierten Polyacrylnitrilfasern und Polyamidfasern und einer das Gewebe bedeckenden Metallschicht. Zur Verbesserung des Luftaustausches ist die Schutzkleidung von Kanälen durchsetzt, die sich von der Außen- zur Innenfläche der Kleidung erstrecken. Der Durchmesser der Kanäle beträgt 0,5 bis 1,0 mm, ihre Anzahl 3 bis 10 pro Quadratzentimeter.

EP 0 108 865 A1

0108865

- 1 -

## Schutzkleidung

Die Erfindung betrifft eine Schutzkleidung, die aus einer ersten Schicht aus einem temperatur- und flammfesten textilen Gewebe und einer zweiten mit der Außenfläche des Gewebes verbundenen Schicht aus einem Metall mit einem großen Reflexionsvermögen besteht.

Aus mehreren Schichten bestehende Schutzkleidungen, z.B. mit einer inneren dem Träger zugewandten Schicht aus einem textilen Gewebe und einer zweiten an der Außenfläche des Gewebes anliegenden und in der Regel mit dem Gewebe verbundenen Schicht aus einem Metall, sind bekannt. Die Gewebeschichten sind im wesentlichen flexible Träger der Metallschicht und die für diesen Zweck verwendeten Fasern sind aufgrund ihrer stofflichen Eigenschaften temperaturbeständig und insbesondere flammfest, wie beispielsweise Mineral-, Glas-, Kohlenstoffasern und durch eine oxidierende Behandlung thermisch stabilisierte Polyacrylnitril- und Cellulosefasern, oder in bekannter Weise mit Flammschutzmitteln ausgerüstet, die die Entflammung und Brennbarkeit beispielsweise von Chemiefasern wirkungsvoll hemmen. Die ein großes Reflexionsvermögen aufweisende Metallschicht, beispielsweise aus Aluminium, die Wärmestrahlung zu einem großen Teil reflektiert, ist in Form einer Folie auf die Außenfläche der Gewebeschicht geklebt oder auf die Gewebeschicht aufgedampft, aufgespritzt oder galvanisch abgeschieden.

Schutzkleidungen dieser Art, die z.B. als Overall, Haube, Kittel, Mantel oder Handschuh getragen werden, behindern wegen ihrer geringen Luftdurchlässigkeit den Träger der Schutzkleidung erheblich. Ein Austausch der durch Schweißbildung mit Feuchtigkeit gesättigten Atmosphäre innerhalb der Schutzkleidung mit der Atmosphäre außerhalb der Schutzkleidung ist praktisch nicht möglich, so daß innerhalb der Schutzkleidung ständig Schwitzwasser kondensiert. Der Erfindung liegt daher die Aufgabe zugrunde, den Luftaustausch zu verbessern, ohne dadurch die Schutzwirkung der Kleidung zu beeinträchtigen.

Die Aufgabe wird mit einer Schutzkleidung der eingangs genannten Art dadurch gelöst, daß die die Schutzkleidung bildenden Schichten von einer Vielzahl sich von der Außenzur Innenfläche der Kleidung erstreckende Kanäle durchsetzt ist. Der Durchmesser der Kanäle beträgt bevorzugt 0,5 bis 1,0 mm und die Anzahl der Kanäle bezogen auf einen Quadratzentimeter ist bevorzugt 3 bis 10.

Die Kanäle oder Durchbrechungen der Schutzkleidung werden zweckmäßigerweise durch Nadeln erzeugt, wobei die Ansatzpunkte an der äußeren metallischen Schicht der Kleidung liegen. Eine Beschädigung der Metallschicht, beispielsweise das Aufreißen und Aufbiegen eines Teils der Schicht, ist bei diesem Verfahren praktisch ausgeschlossen, so daß sich die Gesamtreflexion der metallischen Schicht nur geringfügig ändert. Andererseits ist der atmosphärische Austausch sehr viel besser als bei anderen Schutzkleidungen, wie einfache Vergleichsversuche zeigen. Musterstücke einer Schutzkleidung mit Aluminium-Kaschierung, die pro Quadratzentimeter drei Kanäle mit einem Durchmesser von etwa 0,5 mm enthielten und Muster der gleichen Kleidung ohne diese Schichten durchsetzende Kanäle wurden zwischen jeweils zwei Flansche gespannt und mit einer Wasserschicht von 30 mm überschichtet. Innerhalb einiger Sekunden war das Wasser durch die Kanäle der anmeldungsgemäßen Schutzkleidung abgelaufen, mit der bekannten Schutzkleidung änderte sich die Höhe der Wasserschicht nicht. Die größere Permeabilität der Schutzkleidung wird von ihren Trägern wegen der verbesserten Atmungsaktivität als physiologisch angenehm empfunden.

Die textile Gewebeschicht der Schutzkleidung besteht aus Fasern, die aufgrund ihrer stofflichen Zusammensetzung oder aufgrund ihrer Ausrüstung temperaturbeständig und flammfest sind, z.B. aus thermisch stabilisierten Polyacrylnitrilfasern. Besonders vorteilhaft sind Mischgewebe, aus thermisch stabilisierten Polyacrylnitrilfasern und Polyaramidfasern. Unter thermisch stabilisierten Polyacrylnitrilfasern sind Fasern zu verstehen, die im Temperaturbereich von etwa 120 bis 200 $^{\circ}$C mit sauerstoffhaltigen Gasen oder einem anderen Oxidationsmittel behandelt werden, und beim Erhitzen auch auf hohe Temperaturen nicht entflammen. Das Mischgewebe ist besonders griffest, nimmt kleinere Feuchtigkeitsmengen auf und unterstützt damit die Einstellung eines physiologisch günstigen Wasserdampfgehalts innerhalb des Schutzanzugs.

Die Erfindung wird anhand von Zeichnungen erläutert. Es zeigen:

Fig. 1 - die Schutzkleidung in Form eines Overalls,
Fig. 2 - den vergrößerten Ausschnitt A aus Fig. 1,
Fig. 3 - einen Querschnitt durch die Schutzkleidung.

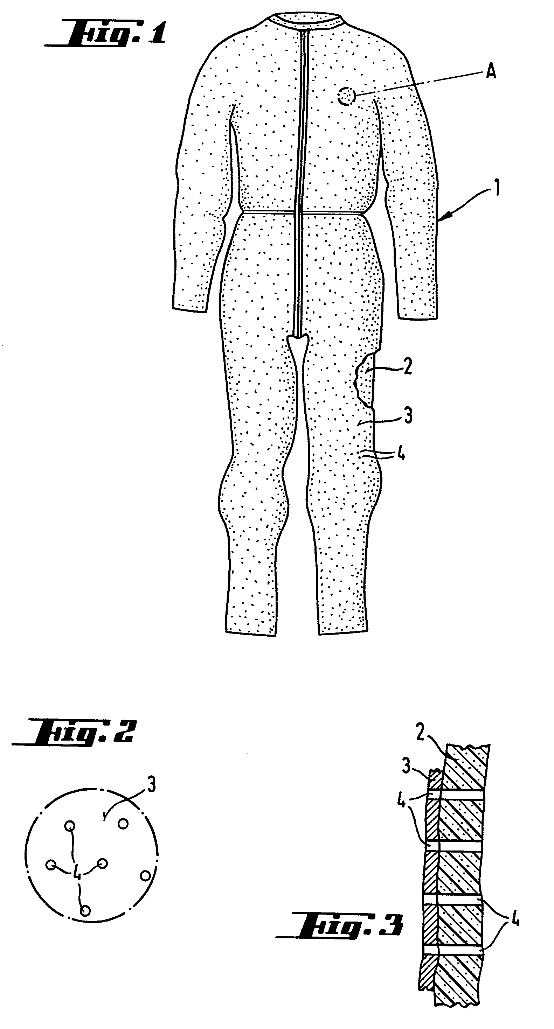

Der Overall 1 besteht aus einer ersten Schicht 2 aus einem Mischgewebe enthaltend 70 % thermisch stabilisiertes Polyacrylnitril und 30 % Polyaramid und einer zweiten mit der Außenschicht des Gewebes verklebten Schicht 3 aus Aluminium. Die Schichten der Schutzkleidung sind von Kanälen 4 durchsetzt, deren Durchmesser etwa 0,7 mm beträgt. Die Anzahl der Kanäle ist 4 pro Quadratzentimeter.

Patentansprüche:

1. Schutzkleidung, bestehend aus einer ersten Schicht aus einem temperatur- und flammfesten textilen Gewebe und einer zweiten mit der Außenfläche des Gewebes verbundenen Schicht aus einem Metall mit einem großen Reflexionsvermögen, dadurch gekennzeichnet, daß die Schichten von einer Vielzahl sich von der Außen- zur Innenfläche der Schutzkleidung erstreckende Kanäle durchsetzt sind.

2. Schutzkleidung nach Patentanspruch 1, dadurch gekennzeichnet, daß der Durchmesser der Kanäle 0,5 bis 1,0 mm beträgt.

3. Schutzkleidung nach den Patentansprüchen 1 und 2, dadurch gekennzeichnet, daß die Anzahl der Kanäle 3 bis 10 pro Quadratzentimeter beträgt.

4. Schutzkleidung nach den Patentansprüchen 1 bis 3, dadurch gekennzeichnet, daß das textile Gewebe ein Mischgewebe aus thermisch stabilisierten Polyacrylnitrilfasern und aus Polyaramidfasern ist.

1/1     0108865

Fig. 1

Fig. 2

Fig. 3

Europäisches
Patentamt

**EUROPÄISCHER RECHERCHENBERICHT**

0108865

Nummer der Anmeldung

EP 83 10 7550

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | GB-A- 446 943 (N.V. INTERNATIONALE ALFOL MAATSCHAPPIJ) <br> * Seite 1, Zeilen 37-48, 67-88; Ansprüche 1,2,4; Figur 3 * <br><br> --- | 1 | A 62 B 17/00 <br> A 41 D 13/00 |
| Y | US-A-4 331 729 (NORFAB CORP.) <br> * Spalte 1, Zeilen 24-54; Spalte 2, Zeilen 9-68; Spalte 3, Zeilen 1-27; Ansprüche 1,4-7; Figuren * <br><br> --- | 1,4 | |
| X | US-A-4 032 681 (MINNESOTA MINING AND MANUFACTURING COMPANY) <br> * Spalte 2, Zeilen 55-68; Spalte 3; Spalte 4, Zeilen 1-24; Ansprüche 1,3,10-14; Figuren * <br><br> --- | 1 | |
| X | BE-A- 519 821 (F. LIMM) <br> * Seite 9, Absatz 3; Ansprüche 1,2,12,30,34,37,54 * <br><br> ----- | 1 | RECHERCHIERTE SACHGEBIETE (Int. Cl. 3) <br><br> A 41 D <br> A 62 B <br> D 02 G |

Der vorliegende Recherchenbericht wurde für alle Patentansprüche erstellt.

| Recherchenort <br> DEN HAAG | Abschlußdatum der Recherche <br> 12-01-1984 | Prüfer <br> GARNIER F.M.A.C. |
|---|---|---|